# EUROPÄISCHE PATENTSCHRIFT

(11) **EP 2 397 655 B1**
(45) Veröffentlichungstag und Bekanntmachung des Hinweises auf die Patenterteilung: **23.05.2018**
(21) Anmeldenummer: 11168796.8
(22) Anmeldetag: 06.06.2011
(51) Int. Cl.: F01D 17/14

(54) **Stellventil für eine Dampfturbine**
Control valve for a steam turbine
Vanne de régulation pour une turbine à vapeur

(30) Priorität: 18.06.2010 DE 102010024342
(43) Veröffentlichungstag der Anmeldung: 21.12.2011
(73) Patentinhaber: Siemens Aktiengesellschaft, 80333 München (DE)
(72) Erfinder: Schreiber, Frank, 02906 Niesky (DE); Paul, Erhard, 02827 Görlitz (DE)

(56) Entgegenhaltungen:
- DE-A1- 3 137 720
- DE-C2- 2 831 368
- US-A- 2 561 214
- US-A- 4 892 118
- US-A- 5 318 270

## Beschreibung

### Technisches Gebiet

Die vorliegende Erfindung betrifft ein Stellventil für eine Dampfturbine. Ferner betrifft die vorliegende Erfindung ein Verfahren zum Einstellen eines Massenstroms eines Fluids über einen Ventilhub eines Stellventils für eine Dampfturbine.

### Hintergrund der Erfindung

In modernen Dampfturbinen entstehen hohe Dampfmassenströme, insbesondere mit niedrigen Frischdampfparametern. Um diese großen Dampfmassenströme zu steuern, werden einzelne Stellventile eingesetzt, welche direkt an oder neben der Turbine platziert werden. Die Regelung der Dampfmenge erfolgt über einen Ventilsitz und einen Ventilkolben, z.B. einen Ventilkegel, eines Stellventils. Die Stellventile werden durch eigene Stellzylinder direkt angesteuert und können somit entsprechend den Betriebsverhältnissen der Turbine individuell geöffnet werden, so dass der gewünschte Dampfmassenstrom einstellbar ist.

Insbesondere bei einem Anfahrprozess einer Turbine ist eine steile Öffnungskennlinie bzw. Ventilkennlinie notwendig. Eine solche steile Öffnungskennlinie zeichnet sich dadurch aus, dass bei einem großen Ventilhub der Massenstrom nur leicht geändert wird. Um eine solche steile Öffnungskennlinie zu erzeugen, sind bisher Stellventile im Einsatz, welche eine spezielle Ventilsitzkontur aufweisen. Hierbei fährt der in Hubrichtung bewegliche Ventilkegel in den Ventilsitz ein. Eine Drosselung des Arbeitsmediums bzw. des Dampfes erfolgt hierbei an der Außenseite des Ventilkegels. Dies führt dazu, dass dynamische Kräfte, welche bei der Drosselung entstehen, ungleichmäßig auf den beweglichen Ventilkegel wirken und Schwingungen verursachen. Diese Schwingungen belasten den beweglich angeordneten Ventilkegel stark. Daher ist obiges Stellventil zur Drosselung nur bis zu einer Ventilgröße von beispielsweise 170 mm (Millimeter) Ventilsitzdurchmesser anwendbar. Bei größeren Stellventilen muss zusätzlich ein sogenanntes Anfahrventil, beispielsweise mit einer kleineren Baugröße, eingesetzt werden, welches sich in der Fluidleitung parallel zum Stellventil, welches z.B. als Frischdampfventil fungiert, befindet.

DE 31 37 720 (A1) offenbart ein Steuerventil, insbesondere zum Steuern und Regeln von Dampfturbinen, dessen in einer Ventilführung bewegbarer Ventilkörper einem Ventilsitz zugeordnet ist, wobei sich der Ventilsitz im Bereich eines konvergenten Kanalteils des Ventilgehäuses befindet an dem der divergierende Kanalteil eines Diffusors angeschlossen ist. Die wechselnden Kräfte, die den Ventilkörper zum Schwingen anregen, werden minimiert, und eine Stabilisierung der Strömung an der Diffusorwand wird dadurch erreicht, dass der konvergente Kanalteil die Kontur eines kreisförmigen Kegelstumpfes und den Übergang in den divergierenden Kanalteil der der Diffusor oder in einen zylindrischen Kanalteil, der dem Diffusor vorgeschaltet ist, erfolgt mittels einer Biegung.

DE 28 31 368 C2 offenbart ein Regelventil für Hochdruckdampf mit einer in einem Ventilgehäuse untergebrachten Ventilführung, einem in dieser Ventilführung verschiebbar beweglichen Ventilkörper mit einem Ventilkegel und einem als Diffusor ausgebildeten Ventilsitzkörper. Die Eintrittslippe ist am Übergang vom Ventilsitz in den Diffusor scharfkantig ausgeführt und die Begrenzungen der Meridianschnitte des Diffusors und des Ventilkegels bestehen nach dem engsten Durchtrittsquerschnitt des Ventilspaltes aus einem Linienzug, der aus nichtkonvexen Linienteilen zusammengesetzt ist.

US 5,318,270 A offenbart ein Ventil mit einem Ventilglied und einem damit zusammenwirkenden Ventilsitz, der einen Nutenbereich vor der Zone des Ventilsitzes aufweist, auf die das Ventilglied aufsetzt. Der Nutenbereich wird von Zähnen gebildet, die durch Nuten voneinander getrennt sind und die Innenwände der Zähne Abschnitte eines Zylinders mit senkrechter Achse sind. Die Breite der Nuten ist kleiner als die Breite der Innenwände der Zähne. Die Wand des Endes des Ventilglieds besitzt gegenüber dem Nutenbereich beigeschlossenem Ventileine konvexe Form, die mit der Innenwand jedes Zahns einen Kanal bildet, der sich von der Spitze bis zum Fuß des Zahns erweitert.

US 4,892,118 A offenbart eine geschlitzte Fluidströmungsaufteilung, die in einem Fluidventil verwendet wird. Die geschlitzte Fluidströmungsaufteilung dient zur Geräuschreduzierung und zur Verschiebung des Frequenzspektrums der Rauschens. Der Schlitz ist einstückig mit dem Ventilsitz ausgebildet. Zusätzlich kann die Querschnittsform der Schlitze variiert werden, um die Hubcharakteristik des Ventils genauer zu steuern.

US 2,561,214 A offenbart ein Ventil zum Steuern eines Drucks in einer Dampfturbine. In dem Ventil bilden Wände eines Ventilkörpers eine erste Kammer. Eine zweite Kammer ist mittels einem Wandbereich separiert, wobei der Wandbereich eine Passage nach Art einer Venturidüse bildet.

### Darstellung der Erfindung

Es ist eine Aufgabe der vorliegenden Erfindung, ein groß dimensioniertes Stellventil für eine Turbine zu schaffen, ohne dass zusätzliche Anfahrventile notwendig sind.

Diese Aufgabe wird durch ein Stellventil und durch ein Verfahren zum Einstellen eines Massenstroms eines Fluids über einen Ventilhub eines Stellventils gemäß den unabhängigen Ansprüchen 1 und 11 gelöst.

Gemäß Anspruch 1 wird ein Stellventil für eine Dampfturbine beschrieben. Das Stellventil weist einen Ventilsitz und einen Ventilkegel auf. Der Ventilsitz weist eine Außenfläche zum Umlenken eines von einer Einströmöffnung des Stellventils in einen Innenraum des Ventilsitzes einströmenden Fluids auf. Der Ventilkegel weist eine Innenfläche auf. Der Ventilkegel umschließt einen Teil des Ventilsitzes. Ferner ist der Ventilkegel mit der Innenfläche entlang der Außenfläche des Ventilsitzes relativ entlang einer Öffnungsrichtung gleitend verschiebbar. Der Ventilkegel ist mit der Innenfläche entlang der Außenfläche des Ventilsitzes derart relativ entlang einer Öffnungsrichtung gleitend verschiebbar, dass bei einer Verschiebung entlang der Öffnungsrichtung ein Spalt zwischen der Innenfläche und der Außenfläche entsteht. Der Spalt erstreckt sich hierbei in einer Richtung senkrecht zu der Innenfläche zwischen der Innenfläche und der Außenfläche. Der Spalt bildet eine Fluidverbindung zwischen der Umgebung, bzw. der Einströmöffnung des Ventilsitzes und dem Innenraum aus, so dass ein Fluidaustausch von der Einströmöffnung in den Innenraum herstellbar ist. Entlang der Öffnungsrichtung verlaufen die Außenfläche des Ventilsitzes und die Innenfläche des Ventilkegels nicht-parallel zueinander. Zudem läuft die Außenfläche in Öffnungsrichtung konisch zu. Mit einer solchen konisch zulaufenden Außenfläche verringert sich sozusagen in Öffnungsrichtung ein Außendurchmesser des Ventilsitzes.

Gemäß Anspruch 11 wird ein Verfahren zum Einstellen eines Massenstroms eines Fluids über einen Ventilhub eines Stellventils für eine Dampfturbine beschrieben. Gemäß dem Verfahren wird ein Ventilkegel des Stellventils relativ zu einem Ventilsitz des Stellventils verschoben. Der Ventilsitz weist eine Außenfläche zum Umlenken eines von einer Einströmöffnung in einen Innenraum des Ventilsitzes einströmenden Fluids auf. Der Ventilkegel umschließt einen Teil des Ventilsitzes und der Ventilkegel ist mit der Innenfläche entlang der Außenfläche des Ventilsitzes derart relativ entlang einer Öffnungsrichtung gleitend verschiebbar, dass bei einer Verschiebung entlang der Öffnungsrichtung ein Spalt zwischen der Innenfläche und der Außenfläche entsteht. Der Spalt erstreckt sich in einer Richtung senkrecht zu der Innenfläche zwischen der Innenfläche und der Außenfläche. Der Spalt bildet eine Fluidverbindung zwischen der Einströmöffnung des Ventilsitzes und dem Innenraum aus, so dass ein Fluidaustausch von der Einströmöffnung in den Innenraum hergestellt wird. Entlang der Öffnungsrichtung verlaufen die Außenfläche des Ventilsitzes und die Innenfläche des Ventilkegels nicht-parallel zueinander. Die Außenfläche in Öffnungsrichtung ist konisch zulaufend ausgeführt.

Mit dem Begriff "Ventilsitz" wird im Folgenden ein nicht beweglicher Teil des Stellventils bezeichnet. Der Ventilsitz kann beispielsweise zylinderförmig ausgebildet sein. Insbesondere kann die Grundfläche der Zylinderform einen Kreiszylinder bilden. Andere Grundflächenformen, wie beispielsweise ein Viereck, ein Sechseck oder andere Vielecke können ebenfalls als Ventilsitz Verwendung finden.

Der Ventilsitz weist eine Außenfläche auf. Die Außenfläche ist derart angeordnet, dass sie als Leitfläche für das zu regelnde Medium, wie z.B. Dampf, dient. Dies bedeutet, dass ein Fluid, welches von der Einströmöffnung des Stellventils in den Innenraum des Ventilsitzes eindringt, zumindest teilweise gegen die Außenfläche strömt und durch die Außenfläche in eine vorbestimmte Strömungsrichtung umgelenkt wird. Die Außenfläche beschreibt somit einen Bereich einer äußeren, dem Ventilkegel zugewandte Fläche des Ventilsitzes, welche als Umlenkfläche eines in den Innenraum einströmenden Fluids dient.

Als "Ventilkegel" wird ein gegenüber dem Ventilsitz bewegliches Element des Stellventils bezeichnet. Der Ventilkegel wird insbesondere im Folgenden als dasjenige bewegliche Teil im Dampfraum des Stellventils bezeichnet, welches den Massenstrom regelt. Dieser Ventilkegel ist nicht zwingend an eine bestimmte geometrische Form gebunden und kann auch wie im vorliegenden Beispiel als "Ventilglocke" ausgeführt sein. Der Ventilkegel weist zum Beispiel ein Hohlprofil, wie beispielsweise eine hohlzylindrische Form, auf. Damit ist der Ventilkegel mit einer nach innen gerichteten Innenfläche über die Außenfläche des Ventilsitzes gleitend bewegbar. Der Ventilkegel kann in Richtung zu dem Ventilsitz und von dem Ventilsitz entfernt bewegt werden. Der Ventilkegel und der Ventilsitz können eine gemeinsame Mittelachse aufweisen, entlang welcher sich der Ventilkegel entlang der Öffnungsrichtung bewegt. Durch eine Bewegung des Ventilkegels relativ zu dem Ventilsitz in Öffnungsrichtung wird eine Fluidverbindung zwischen der Einströmöffnung und dem Innenraum des Ventilsitzes geschaffen. Die Einströmöffnung beschreibt die Zuführleitung des Mediums zu dem Stellventil.

Die Richtung, in welcher sich der Ventilkegel von dem Ventilsitz entfernt und eine Fluidverbindung in Richtung Innenraum zulässt, wird im Folgenden als Öffnungsrichtung bezeichnet. Die Öffnungsrichtung kann beispielsweise in Richtung der gemeinsamen Mittelachse des Ventilsitzes und des Ventilkegels parallel verlaufen.

Entlang der Öffnungsrichtung verlaufen die Außenfläche des Ventilsitzes und die Innenfläche des Ventilkegels nicht-parallel zueinander. Ferner läuft die Außenfläche in Öffnungsrichtung konisch in Richtung Mittellinie zu. Die Innenfläche verläuft z.B. parallel zu der Öffnungsrichtung bzw. der Mittelline. Dies hat zur Folge, dass bei einer Verschiebung des Ventilkegels entlang der Öffnungsrichtung ein Spalt zwischen der Innenfläche und der Außenfläche entsteht, da die Außenfläche in Öffnungsrichtung konisch zuläuft. Der Spalt ist derart ausgebildet, dass ein Fluid von der Einströmöffnung in den Innenraum des Ventilsitzes gelangen kann. Der Spalt definiert gleichzeitig einen engsten Querschnitt zwischen der Einströmöffnung und dem Innenraum. Durch die Entspannung des Fluids nach dem Spalt im Innenraum wird mit dem Spalt eine Art Drosselöffnung gebildet. Der Spalt kann beispielsweise ein Ringspalt sein, welcher sich um den gesamten Umfang des Ventilsitzes erstreckt. Insbesondere ist der Spalt derart definiert, dass sich der Spalt in einer Richtung ausgehend von der Außenfläche senkrecht zu der Innenfläche zwischen der Innenfläche und der Außenfläche erstreckt. Dies bedeutet, dass der Spalt ausschließlich denjenigen Raum beschreibt, welcher zwischen der Innenfläche und der Außenfläche liegt, welcher ausgehend von der Außenfläche in einer senkrechten Richtung zu der Innenfläche liegt.

Mit anderen Worten wird zwischen der konisch zulaufenden Außenfläche und der Innenfläche der Spalt geschaffen, welcher als Drosselstelle dient. Dies führt dazu, dass bei einer Verschiebung des Ventilkegels in Öffnungsrichtung eine kleinere Massenstromänderung (= steile Öffnungskennlinie) erzeugt wird, falls sich der Ventilkegel in einem unteren Teilhubbereich befindet, in welchem der Spalt gebildet wird. Dies bedeutet, dass bei einer großen Hubveränderung des Ventilkegels in dem Teilhubbereich eine kleine Menge an Massenstrom [kg/s] des Fluides direkt steuerbar ist. Dadurch kann der Massenstromzuwachs in diesem Teilhubbereich präzise über den Ventilhub des Ventilkegels geregelt werden. Ein ansonsten bei größeren Stellventilen notwendiges Anfahrventil kann entfallen. Dadurch reduzieren sich beispielsweise die Rohrleitungen im Öl- und Dampfsystem des Stellventils. Ferner entfällt ein Konverter und die Ölversorgungsanlage kann kleiner ausgelegt werden. Der Umfang der Leittechnik (Regelung und Schutzsystem) werden ebenso wesentlich reduziert.

Da mit dem beschriebenen Stellventil der Ventilkegel außen an dem Ventilsitz gleitend beweglich angeordnet ist, wird zudem eine robuste Konstruktion geschaffen. Die Einströmrichtung eines Fluids in das Stellventil verläuft von der Einströmöffnung in den Innenraum des Ventilsitzes. In einer Turbine erfolgt eine Einströmung eines Fluides häufig mit einer überkritischen Strömung, so dass Entspannungsimpulse, insbesondere nach einer Drosselung nach dem engsten Querschnitt, entstehen. Da der Ventilkegel nunmehr außen liegt und durch den Körper des Ventilsitzes gestützt wird und aufgrund der Strömung des Fluides von außen nach innen, wirken die Entspannungsimpulse nicht länger auf die im Stand der Technik üblicherweise innenliegende Außenseite des Ventilkegels, sondern wirken auf die innenliegende Außenseite des Ventilsitzes. Da die kritische Strömungen sowie die daraus resultierenden Entspannungsimpulse nach dem engsten Querschnitt innerhalb des Ventilkegels entstehen, wirken dynamische Kräfte fast ausschließlich auf den fest eingebauten, innenliegenden Ventilsitz. Mit anderen Worten entstehen dadurch kaum dynamische Kräfte, welche auf die beweglichen Einbauelemente (z.B. Ventilkegel) wirken. Das Stellventil bleibt somit über den gesamten Hubbereich stabil. Durch die Reduzierung der dynamischen Kräfte auf die beweglichen Ventilteile reduziert sich ebenfalls der Verschleiß auf die beweglichen Teile, wie z.B. einer Ventilspindel, welche den Ventilkegel steuert. Ferner können Regelungenauigkeiten gerade im unteren Hubbereich, insbesondere im Teilhubbereich, reduziert werden.

Gemäß des erfindungsgemäßen Stellventils und des erfindungsgemäßen Verfahrens ist der Ventilsitz derart ausgebildet, dass die Außenfläche entlang der Öffnungsrichtung in Richtung zu einem Zentrum des Ventilsitzes verläuft, so dass die Außenfläche nicht parallel zu der Mittellinie verläuft. Verläuft beispielsweise die Innenfläche des Ventilkegels parallel zu der gemeinsamen Mittelachse, so kann der Winkel als derjenige Winkel definiert werden, welcher zwischen Außenfläche und Mittellinie gebildet wird. Je größer der Winkel, desto stärker vergrößert sich der Spalt bei einem entsprechenden Öffnungshub des Ventilkegels. Bei einem kleineren Winkel ändert sich der Spalt nur langsam in Öffnungsrichtung bei einem entsprechenden Öffnungshub.

Gemäß einer weiteren beispielhaften Ausführungsform weist der Ventilsitz einen Randabschnitt auf, an welchem die Außenfläche ausgebildet ist. Die Außenfläche bildet sich entlang der Öffnungsrichtung innerhalb eines vorbestimmten Höhenbereichs des Randabschnitts aus. Aus dem Wert des Winkels, des vorbestimmten Höhenbereichs und der relativen Position des Kolbens bezüglich zum Ventilsitz ist eine definierte Größe des Spalts einstellbar.

Der Randbereich wird als Drosselkragen und die Höhe als Drosselkragenhöhe bezeichnet. Der Höhenbereich definiert denjenigen Bereich, in welchem der Spalt zwischen Innenfläche und Außenfläche ausgebildet wird. Wird beispielsweise der Ventilkegel in Öffnungsrichtung in eine Lage bewegt, in welcher ein sich senkrecht zu der Außenfläche erstreckender Vektor nicht die Innenfläche des Ventilkegels schneidet, so wird kein Spalt im Sinne der Erfindung gebildet. Mit anderen Worten, falls der Hub des Ventilkegels in Öffnungsrichtung über den Drosselkragen bzw. den Höhenbereich oder Teilhubbereich hinausgeht, kann ein Teil des Fluids, welches im Wesentlichen senkrecht zur Mittelachse strömt, in den Innenraum der Einströmöffnung einströmen, ohne von der Außenfläche umgelenkt zu werden. Der Öffnungsquerschnitt entlang der gemeinsamen Mittelachse, durch welchen ein senkrecht zur Mittelachse strömendes Fluid nicht von der Außenfläche abgelenkt wird, kann als Öffnungsquerschnitt des Stellventils bezeichnet werden. Mit anderen Worten strömt durch den Öffnungsquerschnitt ein Teil des Fluids an der Außenfläche vorbei, ohne abgelenkt zu werden. In einem solchen Fall befindet sich der Ventilkegel außerhalb des Teilhubbereichs.

Gemäß einer weiteren beispielhaften Ausführungsform ist der Ventilkegel entlang der Öffnungsrichtung mit einem vorbestimmten Ventilhub verschiebbar. Der vorbestimmte Höhenbereich entspricht einem Teilhub (Teilhubbereich) des vorbestimmten Ventilhubs. Der vorbestimmte Höhenbereich definiert beispielsweise einen Abstand bzw. einen Längenbereich parallel zu der Mittelachse.

Der Teilhub entspricht hierbei einem Hub zwischen etwa 2 Prozent und etwa 10 Prozent, insbesondere zwischen etwa 4 Prozent und etwa 7 Prozent und bevorzugt etwa 5 Prozent des vorbestimmten (maximalen) Ventilhubs. Der Teilhub wird beginnend von der Schließstellung des Ventilkegels in Öffnungsrichtung gemessen. Dies bedeutet, dass bei einer Öffnung des Ventilkegels beginnend in der Schließstellung zunächst der Ventilkegel mit dem Teilhub bewegt wird. In dem Bereich des Teilhubs wird der Spalt zwischen der Innenfläche und der Außenfläche gebildet, so dass an diesem engsten Querschnitt (Spalt) ein Fluid in Richtung Innenraum strömt und von der Außenfläche umgelenkt wird. Erst wenn der Ventilkegel die Strecke des Teilhubs in Öffnungsrichtung hinter sich gelassen hat, beginnt in Öffnungsrichtung der Bereich der Ventilöffnung, in welchem ein Teil des Fluids ohne Umlenkung von der Einströmöffnung in den Innenraum strömen kann.

Gemäß einer weiteren beispielhaften Ausführungsform weist der Randabschnitt einen Absatz zur Auflage des Ventilkegels auf, wenn sich der Ventilkegel in einer Schließstellung befindet. Der Absatz kann eine Fläche aufweisen, welche im Wesentlichen senkrecht zu der Mittelachse oder der Öffnungsrichtung verläuft. In der Schließstellung kann kein Fluid von der Einströmöffnung in den Innenraum des Ventilsitzes eindringen. In der Schließstellung liegt der Ventilkegel auf dem Absatz auf, so dass keine weiteren Bewegungen entgegen der Öffnungsrichtung möglich sind. Dies führt zu einer höheren Stabilität des Stellventils. Der Absatz dient somit als Stützfläche des Ventilkegels, welche im Wesentlichen rechtwinklig zur Hubrichtung verlaufen kann.

Gemäß einer weiteren beispielhaften Ausführungsform weist der Ventilsitz einen Fluidkanal auf. Der Fluidkanal ist derart ausgebildet, dass die Fluidverbindung zwischen der Einströmöffnung und dem Innenraum ausgebildet ist. Die Außenfläche ist derart ausgebildet, dass die Außenfläche ein von der Einströmöffnung in Richtung des Innenraums einströmendes Fluid in Richtung einer Wandung des Fluidkanals umlenkt. Der Fluidkanal kann als Fluidverbindung zwischen der Einströmöffnung und dem Innenraum dienen. Der Fluidkanal kann aus einem einzelnen Kanal gebildet werden, welcher mit seinem Querschnitt sich in Umfangsrichtung des Ventilsitzes erstreckt. Ferner können mehrere Fluidkanäle entlang der Umfangsrichtung des Ventilsitzes angeordnet sein. Die Eigenschaft der Außenfläche, ein einströmendes Fluid nach der Drosselung in Richtung einer Wandung des Fluidkanals umzulenken, kann insbesondere durch den Winkel zwischen Außenfläche und Innenfläche gesteuert werden. Wird der Winkel größer gewählt, so dass die Außenfläche steiler in Richtung Mittelachse konisch verläuft, so wird das Fluid, welches auf die Außenfläche trifft, stärker in Richtung Mittelachse umgelenkt. Die Wandung des Fluidkanals ist ein unbewegliches festes Element des Ventilsitzes. Indem das Fluid an die Wandung des Fluidkanals umgelenkt wird, wird die Stabilität des Stellventils erhöht. Im Vergleich zu beweglichen Teilen des Stellventils weist diese Wandung eine große Stabilität auf.

Gemäß einer weiteren beispielhaften Ausführungsform weist der Innenraum einen Ausströmabschnitt auf. Der Ausströmabschnitt ist derart ausgebildet, dass das Medium, welches Dampf bzw. ein gasförmiges und/oder ein flüssiges Fluid ist, an eine Umgebung, bzw. an eine Ausströmöffnung ausströmbar ist. Mit anderen Worten weist der Innenraum an einer vordefinierten Position einen Ausgang für das Fluid auf. In einer weiteren beispielhaften Ausführungsform weist der Ausströmabschnitt einen Diffusorbereich auf. In einem solchem Diffusorbereich wird das Fluid entspannt und mit einer gewünschten Richtung und Geschwindigkeit aus dem Stellventil ausgeblasen.

Gemäß einer weiteren beispielhaften Ausführungsform ist der Fluidkanal derart eingerichtet, dass das Fluid in eine vorbestimmte Ausströmrichtung des Stellventils umlenkbar ist. Dazu kann der Fluidkanal beispielsweise die Wandung aufweisen, wobei die Wandung von einem äußeren Bereich radial nach innen verläuft, wobei die Wandung zunächst senkrecht zu der Mittelachse verläuft und in einer radial inneren Position parallel zu der Mittelachse verläuft. Damit kann ein Fluidstrom von einer radial gerichteten Einströmrichtung in eine mittelachsparallele Richtung umgelenkt werden.

Gemäß einer weiteren beispielhaften Ausführungsform ist der Ventilsitz und/oder der Ventilkegel zylinderförmig ausgebildet und der Ventilkegel besteht dabei aus einem Hohlzylinder. Der Ventilkegel als Hohlzylinder ist über den Ventilsitz verschieblich angeordnet.

Mit dem beschriebenen Stellventil kann, insbesondere bei groß dimensionierten Stellventilen, eine innenliegende Außenfläche des Ventilsitzes, welche insbesondere in dem Drosselkragen bzw. dem Randbereich angeordnet ist, eine steil verlaufende Ventilkennlinie im unteren Hubbereich bewirken. Eine steil verlaufende Ventilkennlinie bzw. Öffnungskennlinie bedeutet, dass ein großer Ventilhub des Ventilkegels eine kleinere größere Massenstromänderung bewirkt. Eine flache Ventilkennlinie bedeutet hingegen, dass ein kleiner Ventilhub des Ventilkegels eine größere Massenstromänderung im Vergleich zu einem Ventil mit einer steil verlaufenden Ventilkennlinie bewirkt. Dadurch kann der Massenstromzuwachs in dem unteren Hubbereich bzw. in dem Teilhubbereich gezielt geregelt werden. Ein sonst notwendiges Anfahrventil kann bei solch großen Stellventilen damit entfallen.

Liegt der Ventilhub des Ventilkegels in dem Teilhubbereich, d.h. in einem Bereich, in dem der Spalt zwischen der Innenfläche und der Außenfläche gebildet wird, so strömt der Dampf durch den entstandenen Spalt zwischen dem Ventilsitz und dem Ventilkegel. Entstehende Entspannungsimpulse wirken aufgrund der Strömungs- und Entspannungsrichtung des Fluides direkt auf Elemente des Ventilsitzes. Da der Ventilsitz sowie der nachfolgende Ausströmbereich, z.B. Diffusor, fest im Ventilgehäuse oder integral in dem Ventilsitz eingebaut sind, wirken die hier entstehenden dynamischen Kräfte kaum auf bewegliche Ventilteile, wie beispielsweise den Ventilkegel. Ferner entstehen die dynamischen Kräfte erst in Strömungsrichtung nach dem engsten Querschnitt (Spalt), sodass die dynamischen Kräfte auf den innenliegenden Ventilsitz auftreffen und kaum auf die beweglichen Elemente, wie z.B. dem Ventilkegel. Ein Verschleiß von Ventilspindel und Ventilkegel sowie Regelungenauigkeiten können dadurch im Bereich des Teilhubbereichs vermieden werden. Geht der Hub des Ventilkegels über den Teilhubbereich in Richtung Öffnungsrichtung hinaus, so erhöht sich der Massenstromzuwachs über den Ventilhub entsprechend der vordefinierten Ventilgröße (dem Öffnungsquerschnitt) des Stellventils. Mit anderen Worten kann mittels der Außenfläche zum Umlenken eines Fluids in dem unteren Teilhubbereich ein Stellventil bereitgestellt werden, welches zwei Kennlinienbereiche ohne zusätzliche Regelventile aufweist.

Es wird darauf hingewiesen, dass die hier beschriebenen Ausführungsformen lediglich eine beschränkte Auswahl an möglichen Ausführungsvarianten der Erfindung darstellen. So ist es möglich, im Rahmen der durch die Ansprüche definierten Erfindung, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 eine Schnittdarstellung eines Stellventils gemäß einer beispielhaften Ausführungsform;
Fig. 2 eine vergrößerte Ansicht eines Öffnungsbereichs des Stellventils gemäß einer beispielhaften Ausführungsform;
Fig. 3 eine vergrößerte Ansicht eines Öffnungsbereichs eines Stellventils gemäß einer aus dem Stand der Technik bekannten Ausführungsform;
Fig. 4 eine vergrößerte Ansicht eines Öffnungsbereichs eines Stellventils, in welchem sich der Ventilkegel in dem Teilhubbereich befindet;
Fig. 5 eine vergrößerte Ansicht eines Öffnungsbereichs des Stellventils gemäß einer beispielhaften Ausführungsform der vorliegenden Erfindung;
Fig. 6 eine Schnittdarstellung eines Stellventils mit einer Öffnungsstellung gemäß Fig. 5 gemäß einer beispielhaften Ausführungsform der vorliegenden Erfindung; und
Fig. 7 eine beispielhafte Ventilkennlinie, welche mit einem Stellventil gemäß einer beispielhaften Ausführungsform erzielt werden kann.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch und nicht maßstäblich.

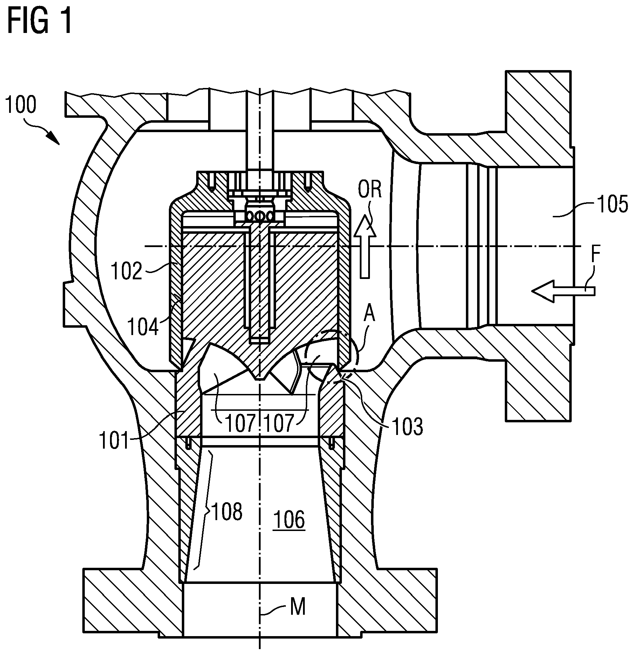

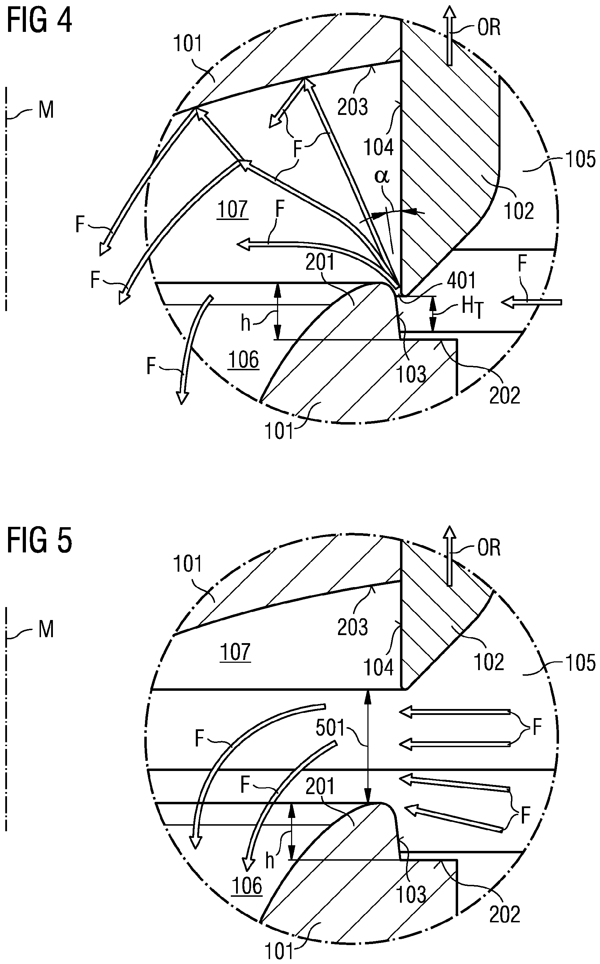

**Fig. 1** zeigt ein Stellventil 100, welches geeignet ist, in einer Dampfturbine eingesetzt zu werden. Das Stellventil 100 weist einen Ventilsitz 101 und einen Ventilkegel 102 auf. Der Ventilsitz 101 weist eine Außenfläche 103 zum Umlenken eines von einer Einströmöffnung 105 des Stellventils 100 in einem Innenraum 106 des Ventilsitzes 101 einströmenden Fluids F auf. Der Ventilkegel 102 weist eine Innenfläche 104 auf. Der Ventilkegel 102 umschließt einen Teil des Ventilsitzes 101. Der Ventilkegel 102 ist mit der Innenfläche 104 entlang der Außenfläche 103 des Ventilsitzes 101 relativ entlang einer Öffnungsrichtung OR gleitend verschiebbar. Der Ventilkegel 102 ist derart gleitend verschiebbar angeordnet, dass bei einer Verschiebung entlang der Öffnungsrichtung OR ein Spalt 401 zwischen der Innenfläche 104 und der Außenfläche 103 entsteht. Der Spalt 401 (siehe Fig. 4) erstreckt sich in Richtung senkrecht zu der Innenfläche 104 zwischen der Innenfläche 104 und der Außenfläche 103, wenn der Ventilkegel 102 sich nicht in einer Schließstellung befindet. Der Spalt 401 bildet eine Fluidverbindung zwischen der Einströmöffnung 105 des Ventilsitzes 101 und dem Innenraum 106 aus, so dass ein Fluidaustausch von der Einströmöffnung 105 in den Innenraum 106 herstellbar ist. Entlang der Öffnungsrichtung OR verläuft die Außenfläche 103 des Ventilsitzes 101 und die Innenfläche 104 des Ventilkegels 102 nicht-parallel zueinander. Ferner verläuft die Außenfläche 103 in Öffnungsrichtung OR konisch zur Mittelachse M zu. Wie in Fig. 1 dargestellt, weisen der Ventilsitz 101 und der Ventilkegel 102 eine gemeinsame Mittelachse M auf. Der Ventilsitz 101 und der Ventilkegel 102 weisen eine zylindrische Form auf, wobei deren Grundfläche als Kreis oder als Vieleck ausgebildet sein kann.

Durch einen Eingang des Stellventils 100 kann ein Fluid F im Wesentlichen radial in Richtung Mittelachse M einströmen. Befindet sich der Ventilkegel 102 in der Schließstellung, kann kein Fluid F in den Innenraum 106 des Ventilsitzes 101 eindringen. Der Ventilkegel 102 ist entlang der Öffnungsrichtung OR verschiebbar. Die Öffnungsrichtung OR verläuft parallel zu der Mittelachse M.

Der Ventilkegel 102 kann von der Schließstellung bis zu einer maximalen Öffnungsstellung bewegt werden. Die Strecke von der Schließstellung zu der maximalen Öffnungsstellung wird als (maximaler) Ventilhub Hv bezeichnet. Ein Öffnungsquerschnitt bzw. eine Spaltgröße wird variabel eingestellt, je nachdem, welchen Ventilhub Hv der Ventilkegel 102 vollzogen hat, so dass ein gewünschter Massenstrom des Fluides F in den Innenraum 106 des Ventilsitzes 101 einströmt.

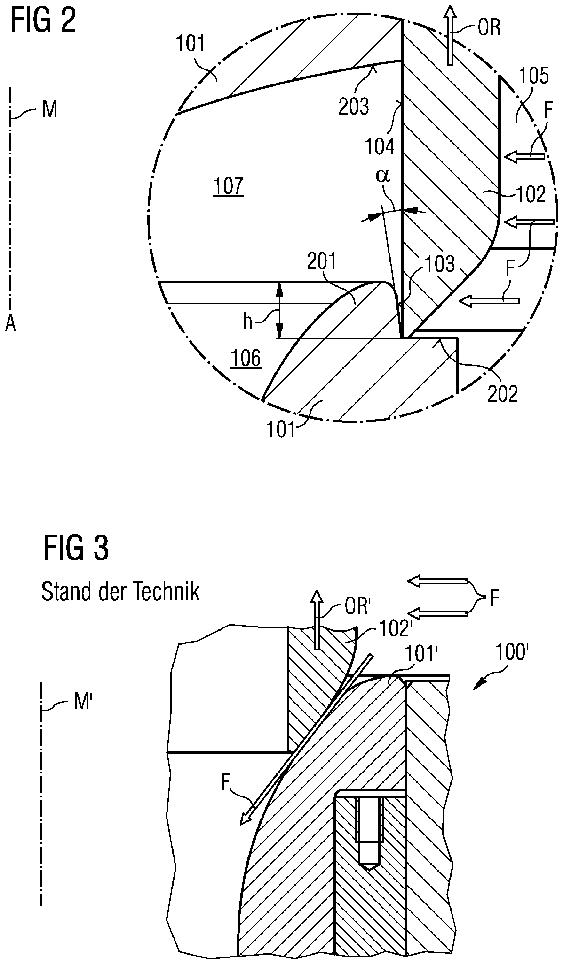

In dem Ventilsitz 101 ist ein Fluidkanal 107 oder auch eine Mehrzahl von Fluidkanälen 107 angeordnet. Ein von der Einströmöffnung 105 des Stellventils 100 einströmendes Fluid F strömt zwischen dem Ventilkegel 102 und der Außenfläche 103 des Ventilsitzes 101 in den Fluidkanal 107. Insbesondere strömt das Fluid F auf eine Wandung 203 (siehe Fig. 2) des Fluidkanals 107. Das Fluid F trifft insbesondere in einer radialen Richtung auf die Wandung 203, sofern ein Teil des Fluids F nicht durch die Außenfläche 103 des Ventilsitzes 101 umgelenkt wurde. Durch die Wandung 203 des Fluidkanals 107 kann das Fluid in eine achsparallele Richtung zur Mittelachse M umgelenkt werden und achsparallel den Innenraum 106 des Ventilsitzes 101 verlassen. In einem Auslassbereich des Ventilsitzes 101 ist ein Diffusorbereich 108 angeordnet, so dass das Fluid F weiter entspannt werden kann. Der Fluidkanal 107 kann in Umfangsrichtung (d.h. entlang einer senkrechten Ebene zur Mittelache M bzw. einer Ebene, deren Normalenvektor parallel zur Mittelachse verläuft) des Ventilsitzes 101 angeordnet sein. Ferner kann auch eine Vielzahl von Fluidkanälen 107 in Umfangsrichtung des Ventilsitzes 107 angeordnet sein.

**Fig. 2** zeigt eine vergrößerte Darstellung des Bereichs A aus Fig. 1. Der Bereich A zeigt insbesondere den Öffnungsbereich zwischen dem Ventilsitz 101 und dem Ventilkegel 102, wobei sich der Ventilkegel 102 in dem Bereich A in einer Schließstellung befindet.

Der Ventilsitz 101 befindet sich zur Mittelachse M innen liegend im Vergleich zu dem Ventilkegel 102, welcher weiter außen in radialer Richtung zur Mittelachse M liegt. Das Fluid F strömt in radialer Richtung von außen gegen den Ventilkegel 102.

In der geschlossenen Stellung, wie in Fig. 2 gezeigt, berühren sich die Außenfläche 103 und die Innenfläche 104 an einem Punkt, so dass kein Fluid F in den Fluidkanal 107 eindringen kann. Ausgehend von der Schließstellung kann der Ventilkegel 102 in Öffnungsrichtung OR (beispielsweise parallel zur Mittelachse M) in eine Öffnungsstellung bewegt werden. Die Innenfläche 104 verläuft wie in Fig. 2 gezeigt, parallel zu der Öffnungsrichtung OR und ebenso parallel zu der Mittelachse M. Die Außenfläche 103 hingegen verläuft nicht-parallel zu der Innenfläche 104. Die Außenfläche 103 verläuft in Öffnungsrichtung OR konisch in radialer Richtung zur Mittelachse M zusammen. Dies bedeutet, dass sich der radiale Abstand der Außenfläche 103 in Öffnungsrichtung OR verkleinert. Der Grad der Verjüngung der Außenfläche 103 entlang der Öffnungsrichtung OR wird über einen Winkel α definiert. Der Winkel α bildet den Winkel zwischen der Außenfläche 103 und der Innenfläche 104. Der Winkel α wird wie in Fig. 2 ausgehend von der Schließstellung des Stellventils 100 gemessen. Verläuft die Innenfläche 104 parallel zu der Öffnungsrichtung OR und der Mittelachse M, so kann der Winkel α definiert werden als der Winkel zwischen Außenfläche 103 und der Mittelachse M.

Bei Bewegung des Ventilkegels 102 in Öffnungsrichtung OR ergibt sich ein variabler, sich ändernder Spalt 401 (siehe Fig. 4), da die Außenfläche 103 und die Innenfläche 104 nicht-parallel verlaufen.

In Fig. 2 ist die Außenfläche 103 in einem Randabschnitt 201 des Ventilsitzes 101 angeordnet. Die Außenfläche 103 verläuft über einen vorbestimmten Höhenbereich h des Randabschnitts 201. Der Höhenbereich h bestimmt einen Streckenbereich entlang der Mittelachse M. Mit anderen Worten definiert der Höhenbereich h eine zur Mittelachse M parallele Strecke, auf welcher Strecke die Höhe h der Außenfläche 103 abgebildet bzw. projiziert ist.

Während der Öffnung des Ventilkegels 102 in Öffnungsrichtung OR beeinflusst die Außenfläche 103 das einströmende Fluid F insbesondere so lange, solange sich der Ventilkegel 102 zumindest teilweise in dem Höhenbereich h befindet. Das radial zur Mittelachse M einströmende Fluid wird dann durch die Außenfläche 103 umgelenkt und gegen eine Wandung 203 des Fluidkanals 107 gelenkt. Von diesem Fluidkanal 107 wird das einströmende Fluid F in Richtung Innenraum 106 umgeleitet.

Da der erste Umlenkbereich (Außenfläche 103) an dem nicht beweglichen Ventilsitz 101 angeordnet ist, wird die Kraft des einströmenden Fluids F zum größten Teil in den Ventilsitz 101 eingeleitet. Der Ventilkegel 102 dient zunächst nicht zur Umlenkung des Fluids F, so dass dieser von Umlenkkräften und Entspannungsimpulsen weitestgehend frei bleibt. Dies erhöht die Stabilität, da die einwirkenden Kräfte des einströmenden Fluids F auf stabilere nicht bewegliche Elemente des Stellventils 100 einwirken und weniger auf bewegliche Elemente des Stellventils 100, wie beispielsweise auf den Ventilkegel 102.

Ferner weist der Randabschnitt 201 einen Absatz 202 auf, welcher sich im Wesentlichen entlang einer radialen Richtung zur Mittelachse M erstreckt. Die Oberfläche des Absatzes 202, welche in Richtung Ventilkegel 102 gerichtet ist, verläuft im Wesentlichen rechtwinklig zur Öffnungsrichtung OR. In Schließstellung dient der Absatz 202 dazu, dass der Ventilkegel 102 aufliegt, so dass eine Stabilität des gesamten Stellventils 100 erhöht wird. Zudem dient der Absatz 202 zur Dichtigkeit des Stellventils 100 in Schließstellung.

**Fig. 3** zeigt im Gegensatz zu Fig. 2 ein herkömmliches Ausführungsbeispiel eines Stellventils 100', insbesondere eines Labyrinth-Glocken-Ventils ohne Drosselkragen. Ein herkömmlicher Ventilkegel 102' liegt auf einer Fläche eines herkömmlichen Ventilsitzes 101' auf. Das herkömmliche Stellventil 100' ist daher in Schließstellung abgebildet. Ein radial zur Mittelachse M' fließendes Fluid F wirkt direkt in radialer Richtung auf den Ventilkegel 102'. Bewegt sich der Ventilkegel 102' in Öffnungsrichtung OR' bildet sich ein Durchgang zwischen dem Ventilkegel 102' und dem Ventilkegel 101'. Der sich dann bildende Durchgang zwischen dem Ventilsitz 101' und dem Ventilkegel 102' führt dazu, dass das Fluid F und die durch das Fluid F wirkende Kraft hauptsächlich auf den Ventilkegel 102' auswirken. Auch Entspannungsimpulse, welche das Fluid F verursacht, werden hauptsächlich auf den beweglichen Ventilkegel 102' übertragen. Die dynamischen Kräfte wirken auf den Endbereich der Außenfläche des beweglichen Ventilkegels 102'. Somit liegt eine höhere Kraftbelastung auf den beweglichen Teilen des Stellelements 100', wie beispielsweise dem Ventilkegel 102', im Gegensatz zu den nicht beweglichen Teilen, wie beispielsweise dem Ventilsitz 101'.

**Fig. 4** zeigt den in Fig. 2 gezeigten Ausschnitt des Stellventils 100, wobei der Ventilkegel 102 in Öffnungsrichtung OR um einen Teilhub Ht verschoben ist. Aufgrund des Winkels α zwischen der Außenfläche 103 und der Innenfläche 104 bildet sich der Spalt 401. Der Spalt 401 bildet einen engsten Querschnitt. Das Fluid F, welches in radialer Richtung zur Mittelachse M strömt, wird an der Außenfläche 103 umgelenkt und in Richtung Wandung 203 des Fluidkanals 107 gelenkt. Die Entspannungsimpulse, welche nach dem engsten Querschnitt (Spalt 401) auftreten, wirken in Richtung Wandung 203 und Außenfläche 103. Dadurch belasten die Entspannungsimpulse weitestgehend die nicht beweglichen Elemente des Stellventils 100, wie beispielsweise dem Ventilsitz 101.

In Fig. 4 ist die Außenfläche 103 in dem Randbereich 201 angeordnet. Der Höhenbereich h definiert die in radialer Richtung projizierte Fläche der Außenfläche 103 auf der Mittelachse M. Bei Bewegung des Ventilkegels 102, innerhalb des Höhenbereichs h bzw. innerhalb des entsprechenden Teilhubbereichs Ht strömt das Fluid F ausschließlich durch den Spalt 401. Aufgrund der Ausrichtung der Außenfläche 103 bzw. aufgrund des vordefinierten Winkels α vergrößert sich der Spalt 401, wenn sich der Ventilkegel 102 in Öffnungsrichtung OR bewegt. Die Änderung des Spalts 401 aufgrund der Bewegung des Ventilkegels 102 führt zu einer äußert exakten Einstellung des Massenstroms des Fluids F durch diesen Spalt 401. Damit kann ein exakter Massenstrom des Fluids F, welcher in dem Innenbereich 106 des Stellventils 100 strömen soll, eingestellt werden. Durch diese präzise Steuerung des Massenstromzuwachses insbesondere in dem Höhenbereich h bzw. in dem Teilhubbereich Ht des Ventilkegels 102 kann der Massenstromzuwachs sehr präzise geregelt werden. Übliche und zusätzlich notwendige Anfahrventile, welche insbesondere bei größeren Stellventilen 100 benötigt werden, können entfallen. Der Teilhubbereich Ht des Ventilkegels 102 definiert einen bestimmten Prozentsatz bzw. einen bestimmten Teilbereich des gesamt möglichen Ventilhubs Hv des Ventilkegels 102. Der Teilhubbereich Ht definiert insbesondere den Bereich, in welchem sich ein Spalt zwischen dem Ventilsitz 101 und dem Ventilkegel 102 bildet. Der maximale Teilhubbereich Ht entspricht insbesondere dem Höhenbereich h. Mit anderen Worten wird ein Massenstrom des Fluids F durch den Spalt 401 so lange gesteuert, solange sich der Ventilkegel 102 in dem Teilhubbereich Ht, d.h. im wesentlichen in dem Höhenbereich h, befindet. Der maximale Teilhubbereich Ht nimmt z.B. 5 Prozent des gesamten Ventilhubes Hv ein. Dies bedeutet wiederum, dass in den ersten 5 Prozent des Ventilhubes Hv ein präziser Massenstromzuwachs des Fluids F durch den Spalt gesteuert werden kann, so dass eine steile Öffnungskennlinie (großer Ventilhub bewirkt wenig Massenstromänderung) bereitstellbar ist. Erst wenn der Ventilhub Hv über beispielsweise 5 Prozent liegt und den Teilhubbereich in Öffnungsrichtung verlassen hat, kann das Fluid F direkt durch den Öffnungsquerschnitt des Ventils in den Innenraum 106 des Stellventils 100 eindringen, ohne von der Außenfläche 103 umgelenkt zu werden. Damit erhöht sich der Massenstromzuwachs im Verhältnis zu einer Stellungsänderung des Ventilkegels 102 in Öffnungsrichtung OR, so dass eine flachere Ventilkennlinie im Vergleich zu der steileren Ventilkennlinie im Teilhubbereich Ht erzeugt wird. Damit können somit zwei verschiedene Regelbereiche in einem Stellventil 100 kombiniert werden.

**Fig. 5** zeigt eine Öffnungsstellung des Ventilkegels 102, bei welchem der Ventilkegel 102 einen größeren Hub in Öffnungsrichtung OR als den Teilhub Ht aufweist. Dies bedeutet, dass ein Teil des Fluids F direkt in den Innenraum 106 des Stellventils 100 durch den Öffnungsquerschnitt der Ventilöffnung 501 eindringt. Das Fluid F strömt zunächst gegen eine Wandung 203 des Fluidkanals 107 des nicht beweglichen und somit stabileren Ventilsitzes 101.

In dieser geöffneten Stellung des Stellventils 100 tritt kein Spalt 401 zwischen der Außenfläche 103 und der Innenfläche 104 im Sinne des beschriebenen Stellventils 100 auf. Ein Spalt 401 im Sinne des beschriebenen Stellventils 100 tritt dann zwischen der Außenfläche 103 und der Innenfläche 104 auf, wenn eine gedachte Linie in senkrechter Richtung ausgehend von der Außenfläche 103 auf die Innenfläche 104 des Ventilkegels 102 trifft. Wie in Fig. 5 dargestellt, verläuft eine senkrechte gedachte Linie ausgehend von der Außenfläche 103 ins Leere und bildet keinen Schnittpunkt mit der Innenfläche 104, so dass hier kein Spalt 401 im Sinne des beschriebenen Stellventils 100 gebildet wird.

In der in Fig. 5 gezeigten Öffnungsstellung des Stellventils 100 wird eine Öffnung mit einem Öffnungsquerschnitt zwischen Ventilkegel 102 und Ventilsitz 101 gebildet, durch welchen Öffnungsquerschnitt ein Teil des Fluids F direkt auf eine Wandung 203 treffen kann, ohne von der Außenfläche 103 in seiner Richtung beeinflusst bzw. umgelenkt zu werden. Der Öffnungsbereich, durch welchen das Fluid direkt in den Innenraum 106 einströmt, ohne von der Außenfläche 103 abgelenkt zu werden, wird bei dem beschriebenen Stellventil 100 Ventilöffnung 501 benannt.

Insbesondere bildet sich eine solche direkte Öffnung mit einem Öffnungsquerschnitt dann im Stellventil 100 aus, wenn der Ventilkegel 102 über den Teilhub Ht hinaus in Öffnungsrichtung OR bewegt wird.

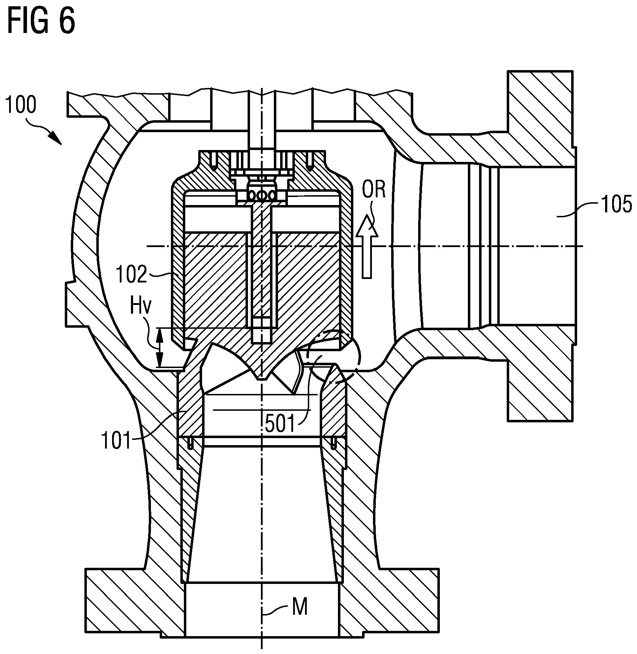

**Fig. 6** zeigt eine Gesamtdarstellung des Stellventils 100 in derselben Öffnungsstellung, wie in Fig. 5 dargestellt. In Fig. 6 ist beispielsweise der maximal mögliche Ventilhub Hv dargestellt. Der Ventilsitz 101 ist als innen liegendes, massives und nicht bewegliches Bauteil ausgeführt. Der Ventilkegel 102 kann als Hohlzylinder ausgebildet werden und als außen liegendes Element bezüglich der Mittelachse M über den Ventilsitz 101 gestülpt und gleitend gelagert werden. Durch die massive Ausgestaltung des Ventilsitzes 101 bilden sich große Auflageflächen für den beweglichen Ventilkegel 102, so dass die Stabilität insbesondere der beweglichen Teile erhöht wird. Ebenso ist die Einströmöffnung 105 dargestellt, durch welche das Medium, wie beispielsweise Dampf bzw. gasförmiges und/oder flüssiges Fluid in den Innenraum 106 einströmt.

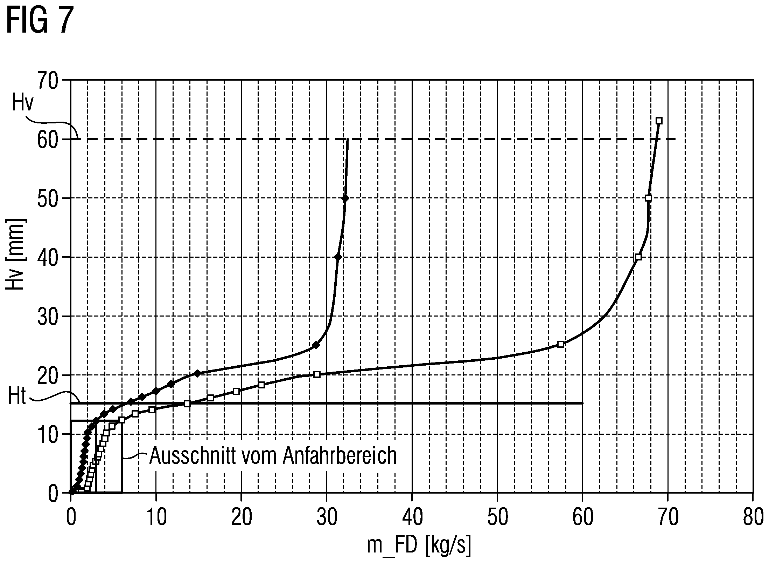

**Fig. 7** zeigt eine Ventilkennlinie (Öffnungskennlinie) eines Stellventils 100. Auf der Abszisse wird der Massenstrom (M_FD [kg/s]) eines in den Innenraum 106 eindringenden Fluids F definiert. Auf der Ordinate ist der Ventilhub (Hv_1 [mm]) angezeichnet. In dem Drosselbereich zwischen den Hubwerten 0 bis etwa 15 mm befindet sich der Ventilkegel 102 im Teilhubbereich Ht, so dass das Fluid F durch die Außenfläche 103 umgelenkt wird und durch den Spalt 401 strömt. Bis zu einem Ventilhub Hv von 60 mm strömt das Fluid F zusätzlich direkt in den Innenraum 106 durch den Öffnungsquerschnitt der Ventilöffnung 501, so dass eine Steigungsänderung in dem Diagramm von Fig. 7 ersichtlich wird. Ein Stellventil 100 gemäß der vorliegenden Erfindung weist somit mindestens zwei unterschiedliche Bereiche mit unterschiedlichen Steigungen auf. In einem ersten, steileren Bereich, wenn sich der Ventilkegel 102 im Teilhubbereich Ht befindet, kann präzise mit einer relativ großen Hubveränderung ein geringer Massenstrom exakt eingestellt werden. Im Vergleich dazu kann in dem Hubbereich außerhalb des Teilhubbereich Ht ein größerer Massenstrom mit einer relativ kleinen Hubveränderung eingestellt werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Stellventil (100) für eine Dampfturbine, wobei das Stellventil (100) aufweist
einen Ventilsitz (101) mit einer Außenfläche (103) zum Umlenken eines von einer Einströmöffnung (105) des Stellventils (100) in einem Innenraum (106) des Ventilsitzes (101) einströmenden Fluids (F), und
einen Ventilkegel (102) mit einer Innenfläche (104),
wobei der Ventilkegel (102) einen Teil des Ventilsitzes (101) umschließt und der Ventilkegel (102) mit der Innenfläche (104) entlang der Außenfläche (103) des Ventilsitzes (101) derart relativ entlang einer Öffnungsrichtung (OR) gleitend verschiebbar ist,
dass bei einer Verschiebung entlang der Öffnungsrichtung (OR) ein Spalt (401) zwischen der Innenfläche (104) und der Außenfläche (103) entsteht, wobei sich der Spalt (401) in einer Richtung senkrecht zu der Innenfläche (104) zwischen der Innenfläche (104) und der Außenfläche (103) erstreckt, wobei der Spalt (401) eine Fluidverbindung zwischen der Einströmöffnung (105) des Ventilsitzes (101) und dem Innenraum (106) bildet, so dass ein Fluidaustausch von der Einströmöffnung (105) in den Innenraum (106) herstellbar ist, **dadurch gekennzeichnet, dass** entlang der Öffnungsrichtung (OR) die Außenfläche (103) des Ventilsitzes (101) und die Innenfläche (104) des Ventilkegels (102) nicht-parallel zueinander verlaufen, und
wobei die Außenfläche (103) in Öffnungsrichtung (OR) konisch zuläuft,
wobei der Ventilsitz (101) derart ausgebildet ist, dass die Außenfläche (103) in Öffnungsrichtung (OR) in Richtung zu einem Zentrum des Ventilsitzes (101) verläuft, so dass die Innenfläche (104) und die Außenfläche (103) zueinander einen Winkel (α) bilden.

2. Stellventil (100) nach Anspruch 1,
wobei der Ventilsitz (101) einen Randabschnitt (201) aufweist, an welchem die Außenfläche (103) ausgebildet ist,
wobei sich die Außenfläche (103) entlang der Öffnungsrichtung (OR) innerhalb eines vorbestimmten Höhenbereich (h) des Randabschnitts (201) ausbildet,
wobei aus dem Winkel (α), des vorbestimmten Höhenbereich (h) und der relativen Position des Ventilkegels (102) bezüglich zum Ventilsitz (101) eine definierte Größe des Spalts (401) einstellbar ist.

3. Stellventil (100) nach Anspruch 2,
wobei der Ventilkegel (102) entlang der Öffnungsrichtung (OR) mit einem vorbestimmten Ventilhub (Hv) verschiebbar ist,
wobei der vorbestimmte Höhenbereich (h) einem Teilhub (Ht) des vorbestimmten Ventilhub (Hv) entspricht.

4. Stellventil (100) nach Anspruch 3,
wobei der Teilhub (Ht) einem Hub zwischen zwei und zehn Prozent, insbesondere zwischen vier und sieben Prozent, bevorzugt fünf Prozent, des vorbestimmten Ventilhub (Hv) entspricht.

5. Stellventil (100) nach einem der Ansprüche 2 bis 4,
wobei der Randabschnitt (201) einen Absatz (202) zur Auflage des Ventilkegels (102) aufweist, wenn sich der Ventilkegel (102) in einer Schließstellung befindet.

6. Stellventil (100) nach einem der Ansprüche 1 bis 5,
wobei der Ventilsitz (101) einen Fluidkanal (107) aufweist, welcher derart ausgebildet ist, dass die Fluidverbindung zwischen der Einströmöffnung (105) und dem Innenraum (106) ausgebildet ist,
wobei die Außenfläche (103) derart ausgebildet ist, dass die Außenfläche (103) ein von der Einströmöffnung (105) in Richtung des Innenraum (106) einströmendes Fluid (F) in Richtung einer Wandung (203) des Fluidkanals (107) umlenkt.

7. Stellventil (100) nach Anspruch 6,
wobei der Innenraum (106) einen Ausströmabschnitt aufweist, welcher derart ausgebildet ist, dass das Fluid (F) an eine Umgebung ausströmbar ist.

8. Stellventil (100) nach Anspruch 7,
wobei der Ausströmabschnitt einen Diffusorbereich (108) aufweist.

9. Stellventil (100) nach einem der Ansprüche 6 bis 8,
wobei der Fluidkanal (107) derart eingerichtet ist, dass das Fluid (F) in eine vorbestimmte Ausströmrichtung des Stellventils (100) umlenkbar ist.

10. Stellventil (100) nach einem der Ansprüche 1 bis 9,
wobei der Ventilsitz (101) und/oder der Ventilkegel (102) zylinderförmig ausgebildet sind und der Ventilkegel (102) ein Hohlzylinder ist.

11. Verfahren zum Einstellen eines Massenstroms eines Fluids (F) über einen Ventilhub (Hv) eines Stellventils (100) für eine Dampfturbine, das Verfahren aufweisend
Verschieben eines Ventilkegels (102) des Stellventils (100) relativ zu einem Ventilsitz (101) des Stellventils (100),
wobei der Ventilsitz (101) eine Außenfläche (103) zum Umlenken eines von einer Einströmöffnung (105) in einem Innenraum (106) des Ventilsitzes (101) einströmenden Fluids (F) aufweist,
wobei der Ventilkegel (102) einen Teil des Ventilsitzes (101) umschließt und der Ventilkegel (102) mit der Innenfläche (104) entlang der Außenfläche (103) des Ventilsitzes (101) derart relativ entlang einer Öffnungsrichtung (OR) gleitend verschiebbar ist,
dass bei einer Verschiebung entlang der Öffnungsrichtung (OR) ein Spalt (401) zwischen der Innenfläche (104) und der Außenfläche (103) entsteht, wobei sich der Spalt (401) in einer Richtung senkrecht zu der Innenfläche (104) zwischen der Innenfläche (104) und der Außenfläche (103) erstreckt, wobei der Spalt (401) eine Fluidverbindung zwischen der Einströmöffnung (105) des Ventilsitzes (101) und dem Innenraum (106) bildet, so dass ein Fluidaustausch von der Einströmöffnung (105) in den Innenraum (106) hergestellt wird, **dadurch gekennzeichnet, dass** entlang der Öffnungsrichtung (OR) die Außenfläche (103) des Ventilsitzes (101) und die Innenfläche (104) des Ventilkegels (102) nicht-parallel zueinander verlaufen, und
wobei die Außenfläche (103) in Öffnungsrichtung (OR) konisch zuläuft,
wobei der Ventilsitz (101) derart ausgebildet ist, dass die Außenfläche (103) in Öffnungsrichtung (OR) in Richtung zu einem Zentrum des Ventilsitzes (101) verläuft, so dass die Innenfläche (104) und die Außenfläche (103) zueinander einen Winkel (α) bilden.

## Claims

1. Control valve (100) for a steam turbine, wherein the control valve (100) has
a valve seat (101) with an outer surface (103) for diverting a fluid (F), which flows from an inflow opening (105) of the control valve (100) into an interior space (106) of the valve seat (101), and
a valve cone (102) with an inner surface (104),
wherein the valve cone (102) surrounds a part of the valve seat (101), and the valve cone (102) is, with the inner surface (104), slidingly displaceable along the outer surface (103) of the valve seat (101) in a relative manner along an opening direction (OR) such
that, during a displacement along the opening direction (OR), a gap (401) forms between the inner surface (104) and the outer surface (103), wherein the gap (401) extends between the inner surface (104) and the outer surface (103) in a direction perpendicular to the inner surface (104),
wherein the gap (401) forms a fluidic connection between the inflow opening (105) of the valve seat (101) and the interior space (106), with the result that an exchange of fluid from the inflow opening (105) into the interior space (106) is able to be established,
**characterized in that**
the outer surface (103) of the valve seat (101) and the inner surface (104) of the valve cone (102) run in a non-parallel manner with respect to one another along the opening direction (OR), and
wherein the outer surface (103) tapers conically in the opening direction (OR),
wherein the valve seat (101) is formed such that the outer surface (103) runs in a direction towards a centre of the valve seat (101) in the opening direction (OR), with the result that the inner surface (104) and the outer surface (103) form an angle (α) to one another.

2. Control valve (100) according to Claim 1,
wherein the valve seat (101) has an edge section (201) on which the outer surface (103) is formed,
wherein the outer surface (103) is formed within a predetermined height region (h) of the edge section (201) along the opening direction (OR),
wherein a defined size of the gap (401) is settable from the angle (α), the predetermined height region (h), and the relative position of the valve cone (102) in relation to the valve seat (101).

3. Control valve (100) according to Claim 2,
wherein the valve cone (102) is displaceable by a predetermined valve stroke (Hv) along the opening direction (OR),
wherein the predetermined height region (h) corresponds to a partial stroke (Ht) of the predetermined valve stroke (Hv).

4. Control valve (100) according to Claim 3,
wherein the partial stroke (Ht) corresponds to a stroke between two and ten per cent, in particular between four and seven per cent, preferably five per cent, of the predetermined valve stroke (Hv).

5. Control valve (100) according to one of Claims 2 to 4,
wherein the edge section (201) has a shoulder (202) for bearing the valve cone (102) when the valve cone (102) is situated in a closed position.

6. Control valve (100) according to one of Claims 1 to 5,
wherein the valve seat (101) has a fluid channel (107) which is formed such that the fluidic connection between the inflow opening (105) and the interior space (106) is formed,
wherein the outer surface (103) is formed such that the outer surface (103) diverts a fluid (F), which flows in from the inflow opening (105) in the direction of the interior space (106), into the direction of a wall (203) of the fluid channel (107).

7. Control valve (100) according to Claim 6,
wherein the interior space (106) has an outflow section which is formed such that the fluid (F) is able to flow out to surroundings.

8. Control valve (100) according to Claim 7,
wherein the outflow section has a diffusor region (108).

9. Control valve (100) according to one of Claims 6 to 8,
wherein the fluid channel (107) is configured such that the fluid (F) is able to be diverted into a predetermined outflow direction of the control valve (100).

10. Control valve (100) according to one of Claims 1 to 9,
wherein the valve seat (101) and/or the valve cone (102) are/is of cylindrical form, and the valve cone (102) is a hollow cylinder.

11. Method for setting a mass stream of a fluid (F) via a valve stroke (Hv) of a control valve (100) for a steam turbine, the method comprising:
displacing a valve cone (102) of the control valve (100) relative to a valve seat (101) of the control valve (100),
wherein the valve seat (101) has an outer surface (103) for diverting a fluid (F), which flows from an inflow opening (105) into an interior space (106) of the valve seat (101),
wherein the valve cone (102) surrounds a part of the valve seat (101), and the valve cone (102) is, with the inner surface (104), slidingly displaceable along the outer surface (103) of the valve seat (101) in a relative manner along an opening direction (OR) such that, during a displacement along the opening direction (OR), a gap (401) forms between the inner surface (104) and the outer surface (103), wherein the gap (401) extends between the inner surface (104) and the outer surface (103) in a direction perpendicular to the inner surface (104),
wherein the gap (401) forms a fluidic connection between the inflow opening (105) of the valve seat (101) and the interior space (106), with the result that an exchange of fluid from the inflow opening (105) into the interior space (106) is established,
**characterized in that**
the outer surface (103) of the valve seat (101) and the inner surface (104) of the valve cone (102) run in a non-parallel manner with respect to one another along the opening direction (OR), and
wherein the outer surface (103) tapers conically in the opening direction (OR),
wherein the valve seat (101) is formed such that the outer surface (103) runs in a direction towards a centre of the valve seat (101) in the opening direction (OR), with the result that the inner surface (104) and the outer surface (103) form an angle (α) to one another.

## Revendications

1. Vanne de réglage (100) pour une turbine à vapeur, la vanne de réglage (100) comprenant :
un siège de vanne (101) comportant une surface extérieure (103) pour détourner un fluide (F) s'écoulant par une ouverture d'admission (105) de la vanne de réglage (100) dans une cavité interne (106) du siège de vanne (101), et un cône de vanne (102) comportant une surface intérieure (104),
dans laquelle le cône de vanne (102) entoure une partie du siège de vanne (101) et le cône de vanne (102) avec la surface intérieure (104) peut être déplacé en coulissant le long de la surface extérieure (103) du siège de vanne (101) relativement le long d'une direction d'ouverture (OR), de telle sorte que lors d'un coulissement le long de la direction d'ouverture (OR), une fente (401) se produit entre la surface intérieure (104) et la surface extérieure (103), la fente (401) s'étendant dans une direction perpendiculaire à la surface intérieure (104) entre la surface intérieure (104) et la surface extérieure (103), et
la fente (401) formant une communication de fluide entre l'ouverture d'admission (105) du siège de vanne (101) et la cavité interne (106), de telle sorte qu'un échange de fluide peut être produit depuis l'ouverture d'admission (105) dans la cavité interne (106),
**caractérisée en ce que**, le long de la direction d'ouverture (OR), la surface extérieure (103) du siège de vanne (101) et la surface intérieure (104) du cône de vanne (102) ne sont pas parallèles entre elles, et
dans laquelle la surface extérieure (103) converge de façon conique dans la direction d'ouverture (OR), et
le siège de vanne (101) est conçu de telle sorte que la surface extérieure (103) dans la direction d'ouverture (OR) s'étend en direction d'un centre du siège de vanne (101), de telle sorte que la surface intérieure (104) et la surface extérieure (103) forment entre elles un angle (α).

2. Vanne de réglage (100) selon la revendication 1,
dans laquelle le siège de vanne (101) comprend une partie de bord (201) au niveau de laquelle la surface extérieure (103) est formée,
la surface extérieure (103) se forme le long de la direction d'ouverture (OR) dans une plage de hauteur (h) prédéterminée de la partie de bord (201), et
une grandeur définie de la fente (401) peut être réglée à partir de l'angle (a), de la plage de hauteur prédéterminée (h) et de la position relative du cône de vanne (102) par rapport au siège de vanne (101).

3. Vanne de réglage (100) selon la revendication 2,
dans laquelle le cône de vanne (102) peut coulisser le long de la direction d'ouverture (OR) avec une course de vanne prédéterminée (Hv), et
la plage de hauteur prédéterminée (h) correspond à une course partielle (Ht) de la course de vanne prédéterminée (Hv) .

4. Vanne de réglage (100) selon la revendication 3,
dans laquelle la course partielle (Ht) correspond à une course de deux à dix pour cent, notamment de quatre à sept pour cent, de préférence à cinq pour cent de la course de vanne (Hv) prédéterminée.

5. Vanne de réglage (100) selon l'une des revendications 2 à 4, dans laquelle la partie de bord (201) comprend un palier de repos (202) pour supporter le cône de vanne (102) lorsque le cône de vanne (102) se trouve dans une position de fermeture.

6. Vanne de réglage (100) selon l'une des revendications 1 à 5, dans laquelle le siège de vanne (101) comprend un canal de fluide (107) qui est conçu de sorte que la communication de fluide est formée entre l'ouverture d'admission (105) et la cavité interne (106), et
la surface extérieure (103) est conçue de telle manière que la surface extérieure (103) détourne un fluide (F) s'écoulant depuis l'ouverture d'admission (105) vers la cavité interne (106) dans la direction d'une paroi (203) du canal de fluide (107).

7. Vanne de réglage (100) selon la revendication 6,
dans laquelle la cavité interne (106) comprend une partie de sortie d'écoulement qui est conçue de telle manière que le fluide (F) peut s'écouler en sortant aux environs.

8. Vanne de réglage (100) selon la revendication 7,
dans laquelle la partie de sortie d'écoulement comprend une zone de diffuseur (108).

9. Vanne de réglage (100) selon l'une des revendications 6 à 8, dans laquelle le canal de fluide (107) est conçu de telle sorte que le fluide (F) peut être détourné dans une direction d'évacuation prédéterminée de la vanne de réglage (100).

10. Vanne de réglage (100) selon l'une des revendications 1 à 9, dans laquelle le siège de vanne (101) et/ou le cône de vanne (102) ont une forme cylindrique et le cône de vanne (102) est un cylindre creux.

11. Procédé pour régler un débit massique d'un fluide (F) par le biais d'une course (Hv) d'une vanne de réglage (100) pour une turbine à vapeur, le procédé comprenant l'opération suivante :
coulissement d'un cône de vanne (102) de la vanne de réglage (100) par rapport à un siège de vanne (101) de la vanne de réglage (100),
selon lequel le siège de vanne (101) comporte une surface extérieure (103) pour détourner un fluide (F) s'écoulant depuis une ouverture d'admission (105) dans une cavité interne (106) du siège de vanne (101),
le cône de vanne (102) entoure une partie du siège de vanne (101) et le cône de vanne (102) avec la surface intérieure (104) peut être déplacé en coulissant le long de la surface extérieure (103) du siège de vanne (101) relativement le long d'une direction d'ouverture (OR), de telle sorte que lors d'un coulissement le long de la direction d'ouverture (OR), une fente (401) se produit entre la surface intérieure (104) et la surface extérieure (103), la fente (401) s'étendant dans une direction perpendiculaire à la surface intérieure (104) entre la surface intérieure (104) et la surface extérieure (103), et
la fente (401) forme une communication de fluide entre l'ouverture d'admission (105) du siège de vanne (101) et la cavité interne (106), de telle sorte qu'un échange de fluide peut être produit depuis l'ouverture d'admission (105) dans la cavité interne (106),
**caractérisé en ce que**, le long de la direction d'ouverture (OR), la surface extérieure (103) du siège de vanne (101) et la surface intérieure (104) du cône de vanne (102) ne sont pas parallèles entre elles, et
selon lequel la surface extérieure (103) converge de façon conique dans la direction d'ouverture (OR), et
le siège de vanne (101) est conçu de telle sorte que la surface extérieure (103) dans la direction d'ouverture (OR) s'étend en direction d'un centre du siège de vanne (101), de telle sorte que la surface intérieure (104) et la surface extérieure (103) forment entre elles un angle (α).
